**Europäisches Patentamt**

**European Patent Office**

**Office européen des brevets**

(11) Veröffentlichungsnummer: **0 037 108**
**B1**

(12) **EUROPÄISCHE PATENTSCHRIFT**

(45) Veröffentlichungstag der Patentschrift: **28.11.84**

(51) Int. Cl.³: **B 60 P 3/32**

(21) Anmeldenummer: **81102353.0**

(22) Anmeldetag: **28.03.81**

(54) **Kraftfahrzeug, insbesondere Reisemobil.**

(30) Priorität: **01.04.80 DE 3012682**
**16.06.80 DE 3022617**

(43) Veröffentlichungstag der Anmeldung:
**07.10.81 Patentblatt 81/40**

(45) Bekanntmachung des Hinweises auf die
Patenterteilung:
**28.11.84 Patentblatt 84/48**

(84) Benannte Vertragsstaaten:
**AT BE CH FR GB IT LI NL SE**

(56) Entgegenhaltungen:
**US-A-3 469 881**
**US-A-3 489 454**
**US-A-3 659 894**
**US-A-3 719 244**
**US-A-3 729 224**
**US-A-3 736 019**
**US-A-3 738 699**
**US-A-3 767 252**
**US-A-3 801 150**
**US-A-4 093 301**
**US-A-4 157 201**

(73) Patentinhaber: **Höhn, Roland, Dr.**
**Lipfersbergerstrasse 20**
**D-7118 Ingelfingen (DE)**

(72) Erfinder: **Höhn, Roland, Dr.**
**Lipfersbergerstrasse 20**
**D-7118 Ingelfingen (DE)**

(74) Vertreter: **Popp, Eugen, Dr. et al**
**Patentanwälte Popp, Sajda, v. Bülow, Hrabal &**
**Partner Widenmayerstrasse 48 Postfach 86 06 24**
**D-8000 München 86 (DE)**

Courier Press, Leamington Spa, England.

## Beschreibung

Die Erfindung betrifft ein Kraftfahrzeug, insbesondere Reisemobil, mit Führerhaus und Wohnzelle und einem Durchgang vom Führerhaus zur Wohnzelle wobei die Wohnzelle durch einen Campingaufsatz gebildet ist, der auf der Ladefläche des Kraftfahrzeuges befestigt ist.

Die Ausbildung einer Wohnzelle in Form sogenannter "pick-up-Aufsätze" ist bekannt und insbesondere in den USA sehr beliebt. Die bekannten Campingaufsätze sind jedoch entweder in der räumlichen Ausdehnung sehr beschränkt und dementsprechend unbequem oder so gross, dass sie sowohl das Dach des Führerhauses als auch den hinteren Abschluss des Fahrzeuges überragen. Die letztgenannte Konstruktion macht das Fahrzeug äusserst windanfällig und auf Grund des hohen Gewichtes schwer manövrierbar. Ferner ist die letztgenannte Konstruktion sehr materialintensity, da sehr voluminös. Die Manövrierfähigkeit wird zudem durch die Höhe der Konstruktion stark beeinträchtigt, die den Gesamtschwerpunkt des Fahrzeuges nach oben verlagert. Schliesslich ist der Fahrwiderstand auf Grund der Höhe der Konstruktion relativ hoch, mit der Folge, dass der Kraftstoffverbrauch entsprechend ansteigt.

Der vorliegenden Erfindung liegt daher die Aufgabe zugrunde, eine pick-up-Konstruktion zu schaffen, die einfach in der Montage ist und insbesondere bei geringen, das Fahrzeug nicht oder nur unwesentlich überragenden Aussenabmessungen der Wohnzelle dennoch einen ausreichend grossen Innenraum, insbesondere einen Bereich mit Stehhöhe, gewährleistet.

Diese Aufgabe wird in überraschend einfacher Weise dadurch gelöst, dass die Wohnzelle im Boden eine Ausnehmung aufweist, die sich im montierten Zustand mit einer entsprechenden Ausnehmung in der Ladefläche des Fahrzeuges unmittelbar im Anschluss an das Führerhaus deckt, und dass sich an die Ausnehmung nach unten eine etwa wannenförmige Vertiefung anschliesst, die im Bereich der Ausnehmung eine grössere lichte Höhe (Stehhöhe) im Inneren des Aufsatzes bzw. der Wohnzelle schafft.

Der wesentliche Kern der Erfindung liegt also darin, dass der Innenraum des Campingaufsatzes bzw. der Wohnzelle "nach unten" vergrössert wird. Damit ist auch die Anordnung eines sogenannten "Hubdaches" entbehrlich, das relativ aufwendig sowohl in der Konstruktion als auch in der Handhabung ist. Es spricht natürlich nichts gegen die zusätzliche Installation eines herkömmlichen Hubdaches.

Die erfindungsgemässe Konstruktion eignet sich im Gegensatz zu der bekannten Konstruktion, z. B. gemäss der US—PS 3 719 244 ganz besonders für Besitzer von Kleinstlastwagen mit relativ kleiner Ladefläche oder Personenkraftwagen mit Ladefläche, bei denen es schwierig ist, einen hohen, insbesondere eine Stehhöhe gewährleistenden Aufsatz anzubringen. Es braucht lediglich in der Ladefläche hinter dem Führerhaus eine Ausnehmung angefertigt zu werden, die nach dem Absetzen des Campingaufsatzes durch einen Deckel oder dgl. verschlossen werden kann.

Sämtliche bekannten Lösungen bauen im Gegensatz zu der erfindungsgemässen Lösung in die Höhe (vgl. z. B. US—PSen 3 736 019, 3 489 454, 3 659 894). Der Raum unter der Ladefläche eines sogenannten Pritschenwagens wird bei den bekannten Lösungen also nicht ausgenutzt.

Die sich ummittelbar an das Führerhaus anschliessende wannenförmige Vertiefung erleichtert auch erheblich das Einsteigen in das Innere des Campingaufsatzes vom Führerhaus her, da sich die Beine sofort nach unten ausstrecken können und somit die Person in im wesentlichen gestrecktem Zustand das Innere des Campingaufsatzes bzw. der Wohnzelle vom Führerhaus des Fahrzeuges her erreichen kann.

Der obere Rand der Ausnehmung ist vorzugsweise mit einem Sitzpolster versehen.

Die erfindungsgemässe Konstruktion ist besonders vorteilhaft für ein Fahrzeug mit einem unter der Ladefläche unmittelbar hinter dem Führerhaus angeordneten geschlossenen Laderaum (z. B. beim VW- Pritschenwagen). In diesem Fall erstreckt sich die wannenförmige Vertiefung in den Laderaum hinein, wobei vorzugsweise der Boden des Laderaums dann gleichzeitig den Boden der Vertiefung bildet. Dies muss jedoch nicht der Fall sein, wenn die sich nach unten erstreckende Vertiefung durch eine geschlossene Wanne gebildet wird, die am Boden des Campingaufsatzes angeformt oder lösbar befestigt ist.

Die Fahrerhäuser von Kleinstlastwagen, Kombi-Fahrzeugen, Pritschenwagen, die für den beschriebenen Campingaufsatz geeignet sind, sind in der Regel mit Sitzbänken ausgestattet. Eine derartige Sitzbank erschwert den Einstieg in die Wohnzelle vom Führerhaus her erheblich. Das Führerhaus müsste daher mit relativ weit voneinander beabstandeten Einzelsitzten ausgestattet werden, um einen leichteren Zugang zur Wohnzelle zu erhalten. Der Raum zwischen den beiden Einzelsitzen muss auch freigehalten werden, um die Möglichkeit zu haben, die Wohnzelle vom Führerhaus und umgekehrt auch während der Fahrt zu erreichen. Nachteilig ist jedoch, dass dieser Zwischenraum zwischen den beiden Einzelsitzen im übrigen verlorener Raum ist, sich insbesondere keine dritte Person in das Führerhaus setzen kann. Diese Nachteile werden bei einem Kraftfahrzeug insbesondere mit einem Durchgang vom Führerhaus zur Wohnzelle zwischen Fahrer- und Beifahrsitz dadurch vermieden, dass Fahrer- und Beifahrersitz soweit voneinander beabstandet sind, dass zwischen ihnen ein dritter Sitz einsetzbar ist, und dass der dritte Sitz ein Klappsitz ist, der bei Nichtgebrauch hinter den Beifahrer- und Führersitz, also zwischen Führerhaus Rückwand und Beifahrer- oder Fahrersitz schieb- oder Schwenkbar ist.

Diese Sitzkonstruktion eignet sich natürlich nicht nur für ein Fahrzeug mit dem oben beschriebenen Campingaufsatz, sondern für Wohnmobile mit Führerhaus und Wohnzelle und einem Durchgang vom Führerhaus zur Wohnzelle schlechthin.

Die erfindungsgemässe Sitzanordnung verbindet auch in eleganter Weise die Vorteile einer Sitzbank mit den Vorteilen von Individualsitzen. Es können mindestens drei Personen im Führerhaus nebeneinander sitzen, wobei gleichzeitig eine Seitenführung für den Beifahrer und Fahrer bei entsprechender Gestaltung der Individual- bzw. Einzelsitze gewährleistet ist. Insbesondere bei Verkehrsunfällen hat sich gezeigt, dass Sitzbänke wegen der fehlenden Seitenführung häufig zi ansonsten vermeidbaren Verletzungen führen. Diese Nachteile lassen sich bei der erfindungsgemässen Sitzanordnung in einfacher Weise vermeiden.

Vorzugsweise sind sowohl Beifahrer- als auch Fahrersitz jeweils als Schalensitze mit seitlich hochgezogenen Sitzpolster- und Rückenpolsterwangen ausgebildet.

Dabei sind vorteilhafterweise die seitlich hochgezogennen Wangen im Querschnitt im wesentlichen symmetrisch, so dass der dritte Sitz bzw. Mittelsitz in Gebrauchsstellung ebenfalls den vollen Komport eines Schalensitzes aufweist.

Bevorzugte konstruktive Weiterbildungen bezüglich des Campingaufsatzes und der Verbindung mit dem Kraftfahrzeug sowie bezüglich der erfindungsgemässen Sitzanordnung sind in den Unteransprüchen näher beschrieben.

Im folgenden wird eine bevorzugte Ausführungsform der Erfindung anhand der beigefügten Zeichnung näher erläutert. Es zeigen:

Fig. 1 ein Fahrzeug mit Campingaufsatz in Seitenansicht, teilweise mit weggebrochener Seitenwand,

Fig. 2 das Fahrzeug mit Campingaufsatz gemäss Fig. 1 in Draufsicht,

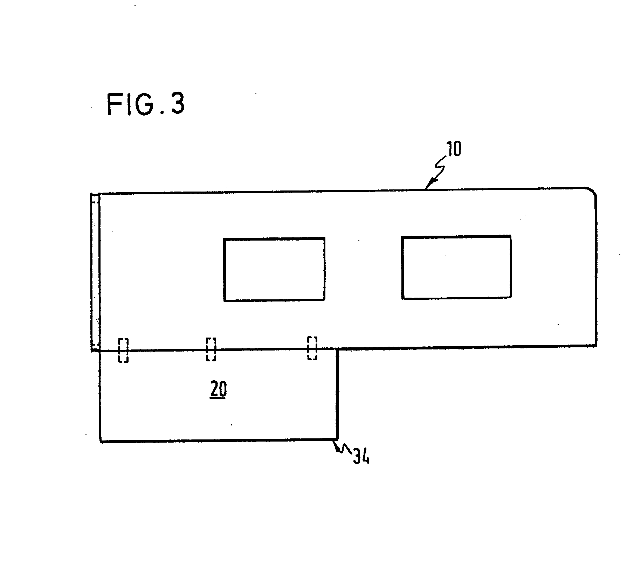

Fig. 3 eine abgewandelte Ausführungsform eines Campingaufsatzes, und

Fig. 4 eine Sitzanordnung im Führerhaus eines Fahrzeuges mit Campingaufsatz gemäss den Fig. 1 bis 3.

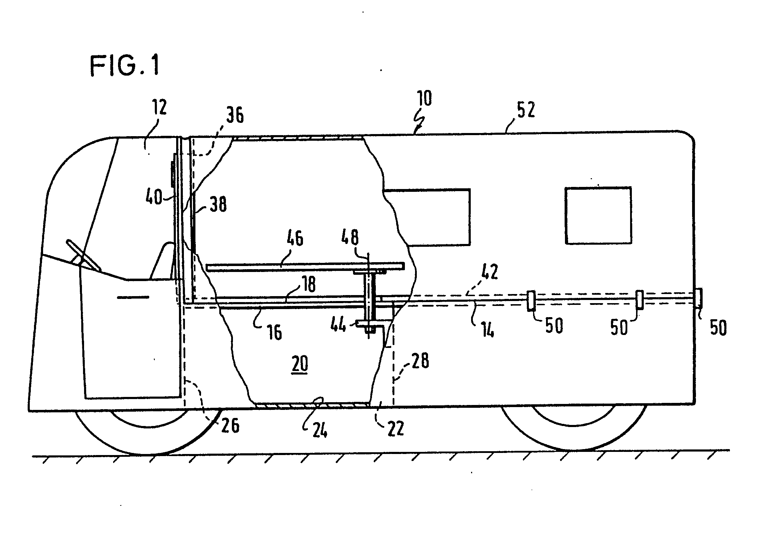

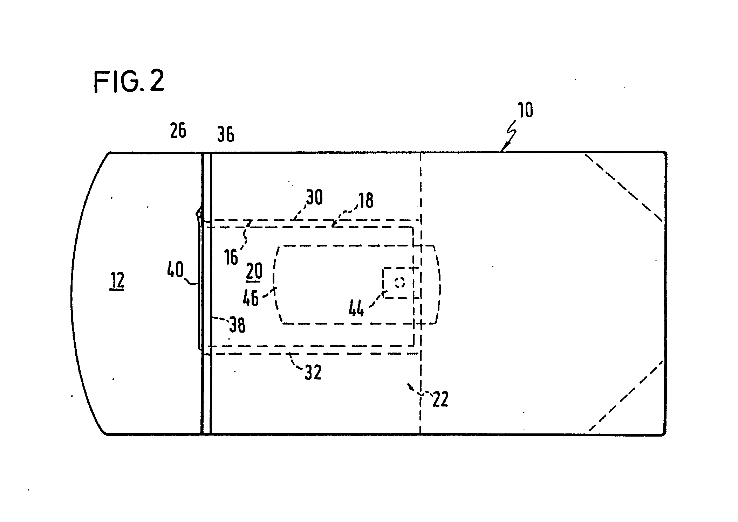

In den Fig. 1 und 2 ist ein motorangetriebener Transporter bzw. Pritschenwagen mit einem Führerhaus 12 und einer Ladefläche 14 schematisch dargestellt, auf der ein eine Wohnzelle bildender Campingaufsatz 10 mittels Schnallenverschlüssen 50 befestigt ist. Der Campingaufsatz 10 ist etwa quaderförmig ausgebildet, wobei das Dach 52 etwa bündig an das Dach des Führerhauses 12 anschliesst. Der Boden 42 des Campingaufsatzes 10 liegt auf der Ladefläche 14 des Transporters auf. Vorzugsweise sind zwischen der Unterseite des Aufsatzes 10 und der Ladefläche Schwingungs-Dämpfungselemente angeordnet, die die Wohnzelle bzw. den Campingaufsatz 10 während der Fahrt relativ schwingungsfrei halten.

Vor der Befestigung des Campingaufsatzes 10 werden vorzugsweise die seitlichen Bordwände und hintere Bordwand der Ladefläche entfernt. Die Befestigung des Campingaufsatzes 10 kann dann auch an den Gelenkscharnieren der Ladebordwände erfolgen.

Der in den Fig. 1 und 2 dargestellte Transporter weist unter der Ladefläche unmittelbar hinter dem Führerhaus einen verschlossenen, durch seitliche Türen zugänglichen Laderaum 22 auf. Wie Fig. 2 zeigt, weist die Ladefläche 14 über dem Laderaum 22 eine Ausnehmung 16 auf, die sich mit einer entsprechenden Ausnehmung 18 im Boden 42 des Campingaufsatzes 10 im wesentlichen deckt. Damit ist im Bereich der Ausnehmung 16 ein Freiraum nach unten geschaffen, der in das Innere bzw. den "Wohnraum" des Campingaufsatzes 10 einbezogen ist. Zwischen den oberen, sich in Fahrzeuglängsrichtung erstreckenden Rändern der Ladefläche—Ausnehmung 16 und dem Boden 24 des Laderaums 22 sind Seitenwände 30, 32 eingesetzt, so dass durch diese beiden Seitenwände sowie die hintere Führerhauswand 26 und die dieser gegenüberliegend angeordnete Begrenzungswand 28 des Laderaums 22 eine etwa wannenförmige Vertiefung geschaffen ist. Zwischen den Seitenwänden 30, 32 und den äusseren Seitenwänden des Fahrzeuges bleibt noch ein aureichender Gepäck- bzw. Laderaum übrig. Die Seitenwände 30, 32 sind vorzugsweise lösbar befestigt, so dass beim normalen Gebrauch des Transporters der volle Laderaum 22 zur Verfügung steht. In diesem Falle ist auch die Ausnehmung 16 in der Ladefläche 15 durch einen Deckel verschlossen.

In der hinteren Führerhauswand 26 ist eine Tür 40 vorgesehen, wobei sich in der hinteren Führerhauswand 26 zugekehrten vorderen Abschlusswand 36 eine entsprechende Öffnung 38 befindet, so dass man das Innere des Campingaufsatzes vom Führerhaus her durch die Tür 40 und die Öffnung 38 erreichen kann. Die Öffnung 38 und Tür 40 sind dabei oberhalb der Vertiefung 20 angeordnet, wodurch sich der Einstieg in das Innere des Campingaufsatzes 10 erheblich erleichtert. Bei entsprechend niedrigem Boden des Führerhauses können die Öffnung 38 und Tür 40 bis etwa zum Boden 24 des Laderaums 22 verlängert werden. Die Tür 40 ist nicht unbedingt erforderlich. Bei Weglassung der Tür 40 erhält man einen bequemen Durchgang zwischen Führerhaus und Wohnzelle bzw. dem Innenraum des Campingaufsatzes 10.

Bei dem Ausführungsbeispiel gemäss Fig. 1 erstreckt sich die Tür 40 etwa von der Ladefläche 14 bis knapp unter das Dach des Führerhauses 12.

Statt einer Tür kann auch ein Deckel vorgesehen sein, der leicht abnehmbar ist. Bei Benutzung des Campingaufsatzes 10 wird dann der Deckel entfernt, so dass stets ein Durchgang zwischen dem Führerhaus 12 und dem Campingaufsatz 10 vorhanden ist.

Zwischen der hinteren Führerhauswand 26 und der angrenzenden Abschlusswand 36 des Aufsatzes 10 ist zumindest um die Öffnung 38 herum eine luft- und wasserdichte sowie elastische Dichtleiste angeordnet. Elastisch deshalb, um Relativbewegungen zwischen dem Führerhaus 12 bzw. Fahrzeug und dem Campingaufsatz 10 insbesondere während der Fahrt auszugleichen.

Die hintere Abschlusswand des Campingaufsatzes 10 kann noch zusätzlich eine Einstiegluke oder dgl. aufweisen. Notwendig ist dies jedoch nicht, zumal das Betreten des Campingaufsatzes 10 nur durch das Führerhaus hindurch erfolgen soll. Aus sicherheitsgründen ist jedoch die Einstiegluke empfehlenswert.

An der hinteren Begrenzungswand 28 des Laderaums 22 ist ein Haltebügel 44 befestigt, an dem ein Tisch 46 um eine vertikale Achse 48 drehbar gelagert ist. Der Tisch 46 ist vorzugsweise so dimensioniert, dass er gleichzeitig als Deckel für die Ausnehmung 16 der Ladefläche 14 verwendet werden kann. Der obere Rand der Ausnehmung 18 im Boden 42 des Aufsatzes 10 ist vorzugsweise mit Sitzpolstern belegt, so dass ein bequemes Sitzen um den Tisch 46 möglich ist. Die Beine können in die Vertiefung 20 ausgestreckt werden. Im Bereich der Vertiefung 20 weist der Campingaufsatz nahezu Stehhöhe auf. Dies wird also dadurch erreicht, dass der Innenraum des Campingaufsatzes 10 nach unten hin ausgedehnt wird, und nicht nach oben hin mittels eines Hubdaches oder dgl., wie dies bisher üblich war.

Für Fahrzeuge, die unterhalb der Ladefläche hinter dem Führerhaus keinen geschlossenen Laderaum aufweisen, weist der Campingaufsatz 10 einen der Vertiefung 20 entsprechenden, oben offenen Kasten 34 (Wanne) auf, der am Boden 42 des Campingaufsatzes 10 mittels Schnellverschlüssen befestigt ist. Der Kasten bzw. die Wanne 34 kann auch einstückig am Boden 42 angeformt sein. Der Kasten bzw. die Wanne 34 wird dann in der Ausnehmung 16 einer Ladefläche 14 versenkt. Falls der Anordnung des Kastens bzw. der Wanne 34 eine unterhalb der Ladefläche verlaufende Gelenkwelle hinderlich ist, kann der Kasten 34 mit einem in der Regel zentral angeordneten Gelenkwellentunnel versehen sein.

Der Kasten bzw. die Wanne 34 kann auch nach Art eines Hubdaches ausgebildet sein. Dabei werden dann die Seitenwände, und zwar auch die vorderen und hinteren Seitenwände der wannenförmigen Vertiefung durch Segeltuch oder anderes faltbares Material gebildet.

Zusätzlich kann im Dach 52 des Campingaufsatzes noch ein herkömmliches Hubdach installiert werden, um eine noch grössere lichte Höhe im Innenraum des Aufsatzes 10 zu erhalten.

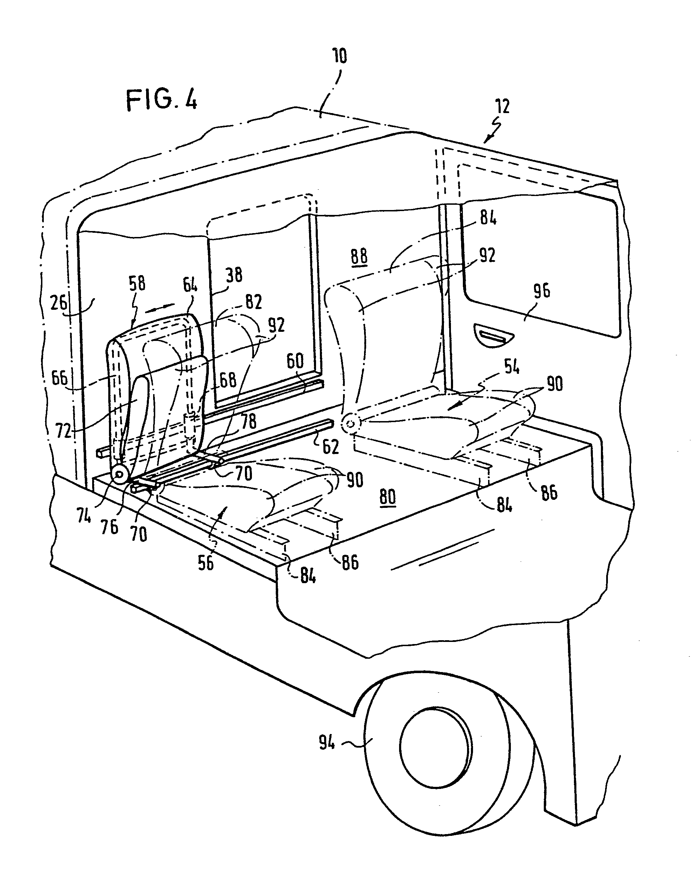

In Fig. 4 ist schematisch das Führerhaus 12

dargestellt, und zwar im wesentlichen weggebrochen, so dass ein Einblick in das Innere 88 des Führerhauses möglich ist. Die Wohnzelle 10 ist in gestrichelten Linien angedeutet. Die Wohnzelle 10 kann z. B. ein Campingaufsatz gemäss der obigen Beschreibung sein.

In der Führerhausrückwand 26 ist ein Durchgang (Öffnung 38) vorgesehen, durch den vom Führerhaus 12 die Wohnzelle 10 und umgekehrt erreichbar ist. Der Durchgang erstreckt sich nahezu über die gesamte Höhe des Führerhauses. Zu beiden Seiten des Durchganges sind zwei Einzelsitze, nämlich der Fahrersitz 54 und der Beifahrersitz 56 angeordnet. Beide Sitze sind auf sich in Fahrzeuglängsrichtung erstreckenden Bodenschienen 84, 86 gelagert und längs diesen Schienen verschiebbar. Hinter dem Beifahrersitz 56 bzw. dessen Rückenlehne 82 ist eine dritter Sitz, nämlich ein Klappsitz 58 angeordnet. Das Sitzpolster 72 dieses dritten Sitzes ist an die Rückenpolsterung angeklappt. Dieser dritte Sitz kann längs der sich quer zur Fahrzeuglängsrichtung erstreckenden Führungsschienen 60, 68 zwischen Fahrer- und Beifahrersitz geschoben werden. In dieser Stellung wird das Sitzpolster 72 nach unten geklappt, wobei es sich im vorliegenden Fall an zwei in Fahrtrichtung über die Anlenkstelle 74 des Sitzpolsters 72 am Rahmen 66 des Sitzes 58 vorstehende Rahmenabschnitte 76, 78 abstützt. In der abgeklappten Stellung nimmt das Sitzpolster 72 eine etwa horizontale Lage ein. Der erwähnte Rahmen 66 ist mit Führungselementen 68, 70 versehen, die mit den Führungsschienen 60, 62 zusammenwirken. Die Führungselemente 68, 70 können gleitlagerartig ausgebildet sein. Es ist auch denkbar, die Führungselemente 68, 70 mit Kugellagern auszurüsten, so dass der dritte Sitz 58 auf den Führungsschienen 60, 62 kugelgelagert ist. Dadurch wird das Verstauen bzw. Hervorholen des dritten Sitzes 58 erheblich erleichtert.

Zum Hervorholen bzw. Verstauen des dritten Sitzes 58 wird vorzugsweise der Beifahrersitz 56 längs der Bodenschienen 84, 86 etwas nach vorn in Fahrtrichtung verschoben, so dass der dritte Sitz 58 durch die Rückenlehne 82 des Beifahrersitzes 56 nicht behindert ist. In der Staulage wird der Beifahrersitz 56 mit seiner Rückenlehne 82 gegen die Unterseite des Sitzpolsters 72 gedrückt, wodurch der dritte Sitz 58 in seiner Staulage fixiert ist. Die Breite des Sitzpolsters 72 und/oder der Rückenpolsterung 64 des dritten Sitzes 58 ist vorzugsweise so gewählt, dass sie im wesentlichen dem Abstand zwischen Beifahrer- und Fahrersitz entspricht. Auf diese Weise ist der dritte Sitz 58 auch in seiner Gebrauchslage gut arretiert. Es können jedoch zusätzliche, manuell bedienbare Arretierungsmittel, wie Führungsschienenklemmen oder dgl., vorgesehen sein.

Wie Fig. 4 zeigt, ist die eine Führungsschiene 62 am Führerhausboden 80 befestigt, während die andere Führungsschiene 60 an der Führerhausrückwand 26 angebracht ist. Es ist jedoch auch möglich, die Führungsschiene 62 ebenfalls an der Führerhausrückwand im Abstand von der Führungsschiene 60 anzubringen. Wesentlich ist nur, dass die beiden Führungsschienen einen gewissen Abstand voneinander haben und sich parallel zueinander erstrecken, so dass ein Verklemmen bzw. Verkanten beim Hervorholen bzw. Verstauen des dritten Sitzes 58 vermieden wird. Im Falle, dass beide Führungsschienen 60, 62 an der Führerhausrückwand 26 angebracht sind wird das Sitzpolster im abgeklappten Zustand vorzugsweise durch mindestens eine an der Unterseite angelenkte, beim Abklappen sich selbsttätig in die vertikale bewegende Stütze am Führerhausboden 80 abgestützt. Es ist natürlich auch denkbar, die Anlenkung bzw. das Gelenk 74 so auszubilden, dass es zugleich als Abstützelement dient. Derartig ausgebildete Gelenke sind an sich bekannt.

In dem in Fig. 4 dargestellten Beispiel sind sowohl der Beifahrersitz 56 als auch der Fahrersitz 54 jeweils als Schalensitze mit seitlich hochgezogenen Sitzpolster- und Rückenpolsterwangen 90, 92 ausgebildet. Dadurch ist gewährleistet, dass auch der dritte Sitz 58, wenn er zwischen Fahrer- und Beifahrersitz angeordnet ist, Schalensitzziegenschaften aufweist, obwohl er selbst nicht mit seitlich hochgezogenen Sitzpolster- und Rückpolsterwangen versehen ist. Um die Bequemlichkeit auch des dritten Sitzes 58 zu erhöhen, sind zumindest die einander zugewandten Sitzpolster- und Rückenpolsterwangen 90, 92 im Querschnitt jeweils symmetrisch ausgebildet, vorzugsweise spitzgewölbeartig. Die letztgenannte Ausführungsform bringt nicht nur Bequemlichkeit für alle drei im Führerhaus sitzenden Personen, sondern auch ein erhebliche Verbesserung der Seitenstabilität und damit Verminderung der Verletzungsgefahr bei Unfällen.

Zur Erläuterung sei noch erwähnt, dass die Rückenlehne des Fahrersitzes 54 mit der Bezugsziffer 84 und das rechte Vorderrad des nur teilweise dargestellten Fahrzeuges mit der Bezugsziffer 94 gekennzeichnet sind. Die Fahrertür ist mit der Bezugsziffer 96 versehen.

Der dritte Sitz 58 bzw. Mittelsitz kann auch gegenüber den beiden Einzelsitzen 54, 56 etwas nach hinten versetzt angeordnet sein. Dies insbesondere dann, wenn er aus dem Inneren der Wohnzelle 10 heraus in den Zwischenraum zwischen den beiden Einzelsitzen 54, 56 drehbar angeordnet ist, und zwar um eine etwa vertikale bzw. aufrechte Achse.

Es sei abschließen noch darauf hingewiesen, daß bei einem Fahrzeug mit etwas kleinerer Ladefläche und größerem Fahrgastraum bzw. größerer Führerhauskabine der Camping- bzw. pick-up-Aufsatz vorzugsweise das hintere Ende der Ladefläche bzw. das hintere Fahrzeugende überragt und gleichzeitig nach unten vergrößert ist. Dadurch erhält man zusätzlichen Wohnraum. Ferner wird der Einstieg von hinten her in die Wohnzelle des Campingaufsatzes erheblich erleichtert.

Um eine gleichmäßige Achsbelastung zu erhalten, ist im letztgenannten Fall der Camping auf satz in bekannter Weise über das Dach des Führerhauses nach vorne gezogen. Im längsschnitt hat de Campingaufsatz dann einen etwa U-förmigen Umriß mit einer Verlängerung des Steges nach vorne. Diese Verlängerung ist der über dem Führerhausdach angeordnete Teil des Camping auf satzes. Zwischen den beiden Schenkeln des Aufsatzes befinden sich die Hinterachse und gegebenenfalls der Motorraum (vgl. VW-Transporter mit Heckmotor) des Fahrzeuges.

**Patentansprüche**

1. Kraftfahrzeug, insbesondere Reisemobil, mit Führerhaus (12) und Wohnzelle und einem Durchgang (38, 40) vom Führerhaus zur Wohnzelle, wobei die Wohnzelle durch einen Campingaufsatz (10) gebildet ist, der auf der Ladefläche (14) des Kraftfahrzeuges befestigbar ist, dadurch gekennzeichnet, dass der Boden (42) des Campingaufsatzes eine Ausnehmung (18) aufweist, die sich im montierten Zustand mit einer entsprechenden Ausnehmung (16) in der Ladefläche (14) des Fahrzeuges unmittelbar im Anschluss an das Führerhaus (12) deckt, und dass sich an die Ausnehmung (16, 18) nach unten eine etwa wannenförmige Vertiefung (20) anschliesst, die im Bereich der Ausnehmung (16, 18) eine grössere lichte Höhe (Stehhöhe) im Inneren des Aufsatzes (10) bzw. der Wohnzelle schafft.

2. Kraftfahrzeug nach Anspruch 1 mit einem unter der Ladefläche unmittelbar hinter dem Führerhaus angeordneten geschlossenen Laderaum, dadurch gekennzeichnet, dass die wannenförmige Vertiefung (20) sich in den Laderaum (22) hineinerstreckt, wobei der Boden (24) des Laderaums (22) vorzugsweise zugleich Boden der Vertiefung (20) ist.

3. Kraftfahrzeug nach Anspruch 2, dadurch gekennzeichnet, dass die seitliche Begrenzung der Vertiefung (20) durch die der Führerhauswand (26) gegenüberliegend angeordnete Begrenzungswand (28) des Laderaums (22) und zwei sich in Fahrzeuglängsrichtung erstreckende Seitenwände (30, 32), die den Innenraum des Aufsatzes bzw. der Wohnzelle vom übrigen Laderaum trennen, sowie gegebenenfalls durch die hintere Führerhauswand (26) oder einen Teil derselben gebildet ist.

4. Kraftfahrzeug nach Anspruch 1, dadurch gekennzeichnet, dass die Vertiefung (20) durch eine am Aufsatz (10) einstückig angeformte oder lösbar befestigte Wanne (34) gebildet ist.

5. Kraftfahrzeug nach einem der Ansprüche 1 bis 4, dadurch gekennzeichnet, dass die vordere, der hinteren Führerhauswand (26) zugekehrte Abschlusswand (36) des Aufsatzes (10) eine Öffnung (38) zum Einsteigen in das Aufsatzinnere vom Führerhaus her aufweist, wobei diese Öffnung (38) im Bereich einer in der hinteren Führerhauswand (26) angeordneten Tür oder Einstiegklappe (40) angeordnet ist.

6. Kraftfahrzeug nach einem der Ansprüche 1 bis 5, dadurch gekennzeichnet, daß der Durchgang (38) vom Führerhaus (12) zur Wohnzelle sich etwa bis zum Boden (24) der Verteifung (20) erstreckt.

7. Kraftfahrzeug nach einem der Ansprüche 1 bis 6, dadurch gekennzeichnet, daß die Ausnehmung (18) im Boden (42) des Aufsatzes (10) die Ausnehmung (16) in der Ladefläche (14) etwas überragt.

8. Kraftfahrzeug nach einem der Ansprüche 1 bis 7, dadurch gekennzeichnet, dass an der der Führerhauswand (26) gegenüberliegend angeordneten Begrenzungswand (28) der Vertiefung (20) ein Halter (44) für einen Tisch (46) befestigt ist, wobei der Tisch an diesem Halter um eine etwa vertikale Achse (48) drehbar gelagert ist.

9. Kraftfahrzeug nach Anspruch 8, dadurch gekennzeichnet, dass die Tischplatte zugleich Deckel für die Ausnehmung (16) der Ladefläche (14) ist.

10. Kraftfahrzeug nach einem der Ansprüche 1 bis 9, dadurch gekennzeichnet, dass zwischen der hinteren Führerhauswand (26) und der benachbarten Abschlusswand (36) des Aufsatzes (10) zumindest um die Öffnung (38) herum eine luft- und wasserdichte sowie elastische Dichtleiste angeordnet ist.

11. Kraftfahrzeug nach einem der Ansprüche 1 bis 10, dadurch gekennzeichnet, dass er durch Schnallenverschlüsse (50) oder dgl. auf der Ladefläche (14) des Fahrzeugs betestigbar ist.

12. Kraftfahrzeug nach einem der Ansprüche 1 bis 11, dadurch gekennzeichnet, dass das Dach (52) des Aufsatzes (10) etwa bündig ist mit dem Dach des Fühererhauses (12) des Fahrzeuges.

13. Kraftfahrzeug, insbesondere Reisemobil mit Führerhaus und Wohnzelle und einem Durchgang vom Führerhaus zur Wohnzelle zwischen Fahrer- und Beifahrersitz nach einem der Ansprüche 1 bis 12, dadurch gekennzeichnet, dass Fahrer (54)—und Beifahrersitz (56) soweit voneinander beabstandet sind, dass zwischen ihnen ein dritter Sitz (58) einsetzbar ist, und dass der dritte Sitz (58) ein Klappsitz ist, der bei Nichtgebrauch hinter dem Beifahrer- oder Fahrersitz, also zwischen Führerhausrückwand (26) und Beifahrer (56)—oder Fahrersitz (54) schieb- oder schwenkbar ist.

14. Kraftfahrzeug nach Anspruch 13, dadurch gekennzeichnet, dass der dritte Sitz (58) längs quer zur Fahrzeuglängsrichtung verlaufende Führungsschienen (60, 62) verschiebbar ist.

15. Kraftfahrzeug nach Anspruch 13 oder 14, dadurch gekennzeichnet, dass der dritte Sitz (58) einen die Rückenpolsterung (64) tragenden Rahmen (66) aufweist, der mit den Führungsschienen (60, 62) zusammenwirkenden Führungselementen (68, 70) versehen ist, und dass an diesem Rahmen (66) das Sitzpolster (72) so angelenkt ist, dass es flach an die Rückenpolsterung (64) anlegbar ist.

16. Kraftfahrzeug nach einem der Ansprüche 13 bis 15, dadurch gekennzeichnet, dass das Sitzpolster (72) im abgeklappten Zustand durch etwas in Fahrtrichtung über die Anlenkstelle (Gelenk 74) vorstehende Rahmenabschnitte (76, 78) oder Streben oder dgl. abgestützt ist.

17. Kraftfahrzeug nach einem der Ansprüche 13 bis 15, dadurch gekennzeichnet, dass das Sitzpolster (72) im abgeklappten Zustand durch mindestens eine an der Unterseite angelenkte, beim Abklappen sich selbsttätig in die vertikale bewegende Stütze am Fahrzeugboden (80) abgestützt ist.

18. Kraftfahrzeug nach Anspruch 13, dadurch gekennzeichnet, dass der dritte Sitz (58) an mindestens einem in Fahrzeugquerrichtung ausziehbaren Teleskoparm befestigt ist.

19. Kraftfahrzeug nach Anspruch 13, dadurch gekennzeichnet, dass der dritte Sitz (58) um eine sich etwa in Fahrzeuglängsrichtung erstreckende, etwa auf Höhe des Sitzpolsters von Beifahrer- oder Fahrersitz im seitlichen Randbereich der Lücke zwischen Fahrer- und Beifahrersitz angeordnete Achse in diese Lücke hinein oder aus dieser heraus hinter Beifahrer- oder Fahrersitz bzw. deren Rückenlehne (82 bzw. 84) schwenkbar ist.

20. Kraftfahrzeug nach einem der Ansprüche 13 bis 19, dadurch gekennzeichnet, dass der dritte Sitz (58) sowohl in der Staulage als auch in der Gebrauchsstellung jeweils arretierbar ist.

21. Kraftfahrzeug nach einem der Ansprüche 13 bis 20, dadurch gekennzeichnet, dass zum erleichterten Verstauen des dritten Sitzes (58) hinter Beifahrer- oder Fahrersitz diese in Fahrzeuglängsrichtung, vorzugsweise längs Bodenschienen (84, 86) verschiebbar im Fahrerhaus (88) angeordnet sind.

22. Sitzanordnung nach einem der Ansprüche 13 bis 21, dadurch gekennzeichnet, dass sowohl Beifahrer- (56) als auch Fahrersitz (54) jeweils als Schalensitze mit seitlich hochgezogenen Sitzpolster- und Rückenpolsterwangen (90, 92) ausgebildet sind.

23. Kraftfahrzeug nach einem der Ansprüche 13 bis 22, dadurch gekennzeichnet, dass die Rückenlehne des dritten Sitzes (58) durch den Durchgang (38) zwischen Fahrerhaus (88) und Wohnzelle (Aufsatz 10) hindurch in diese hinein, vorzugsweise in eine etwa horizontale Lage, klappbar ist, so dass der dritte Sitz (58) als Liegesitz verwendbar ist.

**Revendications**

1. Véhicule automobile, en particulier roulotte automobile, comportant une cabine de conduite (12) et une cabine habitable, avec un passage (38, 40) entre la cabine de conduite et la cabine habitable; celle-ci étant constituée par une cabine de camping rapportée (10), adaptée à se fixer sur le plateau de chargement (14) du véhicule automobile; celui-ci étant caractérisé en ce que le plancher (42) de la cabine de camping rapportée présente une échancrure (18), superposée en position de montage à une échancrure correspondante (16) du plateau de chargement (14) du véhicule, immédiatement contre la cabine de conduite (12); et en ce qu'un évidement sensiblement en cuvette (20) est ménagé vers le bas, à l'endroit de l'échancrure (16, 18), de manière à assurer à l'endroit de l'échancrure (16, 18) une hauteur libre plus importante (pour la station debout) à l'intérieur du volume habitable de la cabine rapportée (10).

2. Véhicule selon la revendication 1, comportant un compartiment de chargement fermé, sous le plateau de chargement, immédiatement derrière la cabine de conduite, caractérisé en ce que l'évidement en cuvette (20) s'étend dans le compartiment de chargement (22); le plancher (24) du compartiment de chargement (22) constituant en même temps de préférence le plancher de l'évidement (20).

3. Véhicule selon la revendication 2, caractérisé en ce que la délimitation latérale de l'évidement (20) est constituée par la paroi (28) du compartiment de chargement (22), disposée en regard de la paroi postérieure (26) de la cabine de conduite (12), et par deux parois latérales (30, 32) qui s'étendent dans le sens de la longueur du véhicule, en séparant du reste du compartiment de chargement le volume interne de la cabine habitable rapportée, ainsi qu'éventuellement par la paroi postérieure (26) de la cabine de conduite, ou par une partie de cette paroi.

4. Véhicule selon la revendication 1, caractérisé en ce que l'évidement (20) est constitué par une cuve (34), formant une seule pièce avec la cabine rapportée (10), ou fixée de manière amovible à cette cabine.

5. Véhicule selon l'une des revendications 1 à 4, caractérisé en ce que la paroi antérieure (36) de la cabine rapportée (10), disposée en regard de la paroi arrière (26) de la cabine de conduite (12), présente une ouverture (38) qui permet de pénétrer à l'intérieure de la cabine rapportée (10) à partir de la cabine de conduite (12); cette ouverture (38) étant disposée à l'endroit d'une porte ou d'une trappe d'accès (40) ménagée dans la paroi arrière (26) de la cabine de conduite (12).

6. Véhicule selon l'une des revendications 1 à 5, caractérisé en ce que le passage (38) entre la cabine de conduite (12) et la cabine habitable s'étend sensiblement jusqu'au plancher (24) de l'évidement (20).

7. Véhicule selon l'une des revendications 1 à 6, caractérisé en ce que l'échancrure (18) du plancher (42) de la cabine habitable rapportée (10) déborde un peu au-delà de l'échancrure (16) du plateau de chargement (14).

8. Véhicule selon l'une des revendications 1 à 7, caractérisé en ce qu'un organe de fixation (44) pour une table (46) est prévu sur la paroi (28) de l'évidement (20), située à l'opposé de la paroi postérieure (26) de la cabine de conduite (12); la table (46) étant montée sur l'organe de fixation (44) de manière pivotante suivant un axe (48) sensiblement vertical.

9. Véhicule selon la revendication 8, caractérisé en ce que le plateau de la table (46) sert en même temps de couvercle pour fermer l'échancrure (16) du plateau de chargement (14).

10. Véhicule selon l'une des revendications 1 à 9, caractérisé en ce qu'au moins une bande d'étanchéité élastique, empêchant le passage de l'air et de l'eau, est prévue entre la paroi arrière (26) de la cabine de conduite et la paroi adjacente (36) de la cabine habitable rapportée (10), autour de l'ouverture (38).

11. Véhicule selon l'une des revendications 1 à 10, caractérisé en ce que la cabine habitable rapportée (10) est adaptée à se fixer sur le plateau de chargement (14) du véhicule, au moyen d'organes tels que des attaches à loquet (50).

12. Véhicule selon l'une des revendications 1 à 11, caractérisé en ce que le toit (52) de la cabine habitable rapportée (10) est sensiblement raccordé au toit de la cabine de conduite (12) du véhicule.

13. Véhicule automobile, tel en particulier qu'une roulotte automobile, comportant une cabine de conduite et une cabine habitable avec un passage entre la cabine de conduite et la cabine habitable disposé entre le siège du conducteur et le siège-passager, selon l'une des revendications 1 à 12; caractérisé en ce que l'écartement entre le siège du conducteur (54) et le siège-passager (56) est suffisant pour monter entre ces deux sièges un troisième siège (58); et en ce que le troisième siège (58) est un siège pliant, qui peut être mis en position d'effacement derrière le siège-passager ou derrière le siège du conducteur, entre la paroi arrière (26) de la cabine de conduite (12) et le siège-passager (56) ou le siège du conducteur (54), par coulissement ou par pivotement.

14. Véhicule selon la revendication 13, caractérisé en ce que le troisième siège (38) peut coulisser sur des rails de guidage (60, 62), dans un sens transversal à l'axe longitudinal du véhicule.

15. Véhicule selon l'une des revendications 13 ou 14, caractérisé en ce que le troisième siège (58) comporte une structure (66) portant le rembourrage du dossier (64) du siège, et des organes de guidage (68, 70) qui coopèrent avec les rails de guidage (60, 62); et en ce que l'assise (72) du siège est articulée sur ladite structure (66), de manière à pouvoir se rabattre à plat contre le rembourrage du dossier (64).

16. Véhicule selon l'une des revendications 13 à 15, caractérisé en ce que l'assise (72) du troisième siège (58) est soutenue en position rabattue par des organes d'appui, tels que des éléments (76, 78) de la structure (66) du siège, en saillie sensiblement dans le sens de marche du véhicule, au-delà de l'articulation (74) du siège.

17. Véhicule selon l'une des revendications 13 à 15, caractérisé en ce que l'assise (72) du troisième siège (58) est soutenue en position rabattue par au moins un organe d'appui qui est articulé sur la face inférieure de l'assise, et adapté à se mettre automatiquement à la verticale en position rabattue de l'assise, pour prendre appui sur le plancher (80) du véhicule.

18. Véhicule selon la revendication 13, caractérisé en ce que le troisième siège (58) est fixé sur au moins un bras télescopique adapté à s'étendre transversalement dans le véhicule.

19. Véhicule selon la revendication 13, caractérisé en ce que le troisième siège (58) est monté de manière pivotante, suivant un axe qui s'étend sensiblement dans le sens de la longueur du véhicule et sensiblement à la hauteur de l'assise du siège-passager ou du siège du conducteur, dans la zone qui borde latéralement l'intervalle compris entre le siège-passager et le siège du conducteur, pour pouvoir être engagé dans cet intervalle, ou dégagé hors de cet intervalle et amené derrière le dossier (82 ou 84) du siège-passager ou du siège du conducteur.

20. Véhicule selon l'une des revendications 13 à 19, caractérisé en ce que le troisième siège (58) est verrouillable en position d'effacement ainsi qu'en position de service.

21. Véhicule selon l'une des revendications 13 à 20, caractérisé en ce que, pour favoriser l'effacement du troisième siège (58) derrière le siège-passager ou le siège du conducteur, ceux-ci sont motés à coulisse dans la cabine de conduite (88), pour pouvoir se déplacer dans le sens de la longueur du véhicule, de préférence sur des rails (84, 86) fixés au plancher.

22. Siège selon l'une des revendications 13 à 21, caractérisé en ce que le siège-passager (56) ainsi que le siège du conducteur (54) présentent chacun une configuration en coquille, et comportent, chacun, à cet effet une assise pourvue de bordures en saillie (90) et un dossier pourvu de joues latérales en saillie (92).

23. Véhicule selon l'une des revendications 13 à 22, caractérisé en ce que le dossier du troisième siège (58) peut être rabattu, de préférence à peu près à l'horizontale, pour être engagé dans le passage (38) ménagé entre la cabine de conduite (88) et la cabine habitable (10), de manière à permettre d'utiliser ce troisième siège (58) comme un siège couchette.

**Claims**

1. Motor vehicle, in particular a camper vehicle, with a driver's cab (12) and living unit and a passage (38, 40) from the driver's cab to the living unit, whereby the living unit is formed by a camping attachment (10) which can be secured to the loading surface (14) of the motor vehicle, characterised in that the floor (42) of the camping attachment has a recess (18) which in the mounted condition registers with a corresponding recess (16) in the loading surface (14) of the motor vehicle directly adjacent the driver's cab (12) and that there is connected to the underside of the recess (16, 18) a generally trough-like depression (20) which in the region of the recess (16, 18) provides an increased internal height (standing height) in the interior of the attachment (10) or living unit.

2. Motor vehicle according to claim 1, with a closed loading space arranged below the loading surface directly behind the driver's cab, characterised in that the trough-like depression (20) extends into the loading space (22), whereby the floor (24) of the loading space (22) is preferably also the floor of the depression (20).

3. Motor vehicle according to claim 2, characterised in that the lateral boundary of the depression (20) is formed by the boundary wall (28) of the loading space (22) arranged opposite the driver's cab wall (26) and two side walls (30, 32) extending lengthwise of the vehicle and separating the interior of the attachment or living unit from the remaining loading space, and optionally by the rear driver's cab wall (26) or a part thereof.

4. Motor vehicle according to claim 1, characterised in that the depression (20) is formed by a trough (34) which is integral with or detachable from the attachment (10).

5. Motor vehicle according to one of claims 1 to 4, characterised in that the front end wall (36) of the attachment (10) adjacent the rear driver's cab wall (26) has an opening (38) for climbing into the interior of the attachment from the driver's cab, whereby this opening (38) is arranged in the region of a door or entry flap (40) arranged in the rear driver's cab wall (26).

6. Motor vehicle according to one of claims 1 to 5, characterised in that the passage (38) from the driver's cab (12) to the living unit extends more or less to the floor (24) of the depression (20).

7. Motor vehicle according to one of claims 1 to 6, characterised in that the depression (18) in the floor (42) of the attachment (10) slightly overlaps the recess (16) in the loading surface (14).

8. Motor vehicle according to one of claims 1 to 7, characterised in that on the boundary wall (28) of the depression (20) arranged opposite the driver's cab wall (26) is fixed a support (44) for a table (46), whereby the table is mounted on this support for rotation about a substantially vertical axis (48).

9. Motor vehicle according to claim 8, characterised in that the table top is also a cover for the recess (16) of the loading surface (14).

10. Motor vehicle according to one of claims 1 to 9, characterised in that an air and water tight elastic sealing strip is arranged at least around the opening (38) between the rear driver's cab wall (26) and the adjacent end wall (36) of the attachment (10).

11. Motor vehicle according to one of claims 1 to 10, characterised in that it can be fixed on the loading surface (14) of the vehicle by catches (50) or the like.

12. Motor vehicle according to one of claims 1 to 11, characterised in that the roof (52) of the attachment (10) is approximately flush with the roof of the driver's cab (12) of the motor vehicle.

13. Motor vehicle, in particular a camper vehicle with driver's cab and living unit and a passage from the driver's cab to the living unit between the driver and passenger seats, according to one of claims 1 to 12, characterised in that driver's (54) and passenger's seat (56) are spaced so far apart that a third seat (58) can be inserted between them, and that the third seat (58) is a folding seat which when out of use can be slid or pivoted behind the passenger or driver seat, i.e., between the driver's cab rear wall (26) and the passenger (56) or driver seat (54).

14. Motor vehicle according to claim 13 characterised in that the third seat (58) is slidable along guide rails (60, 62) running transversely of the longitudinal direction of the vehicle.

15. Motor vehicle according to claim 13 or 14, characterised in that the third seat (58) has a frame (66) which carries the back cushion (64) and which is provided with guide elements (68, 70) cooperating with the guide rails (60, 62), and that the seat cushion (72) is so hinged to this frame (66) that it can lie flat against the back cushion (64).

16. Motor vehicle according to one of claims 13 to 15, characterised in that the seat cushion (72) is supported in the lowered condition by frame sections (76, 78) extending generally in the direction of travel beyond the hinge location (joint 74) or by struts or the like.

17. Motor vehicle according to one of claims 13 to 15, characterised in that the seat cushion (72) in the lowered condition is supported on the vehicle floor (80) by at least one leg pivoted to the underside and moving automatically into the vertical position during lowering.

18. Motor vehicle according to claim 13, characterised in that the third seat (58) is fixed to at least one telescopic arm which can be extended transversely of the vehicle.

19. Motor vehicle according to claim 13, characterised in that the third seat (58) is pivotal about an axis extending approximately lengthwise of the vehicle and arranged at about the level of the seat cushion of the passenger or driver's seat in the lateral edge region of the gap between the driver's and passenger's seat, into said gap or out of said gap behind the passenger or driver's seat or the rear supports (82 or 84) thereof.

20. Motor vehicle according to one of claims 13 to 19, characterised in that the third seat (58) can be locked in the stowed position and in the position of use.

21. Motor vehicle according to one of claims 13 to 20, characterised in that in order to facilitate stowage of the third seat (58) behind the passenger or driver's seats the latter are displaceable lengthwise of the vehicle in the driver's cab (88), preferably along floor rails (84, 86).

22. Seat arrangement according to one of claims 13 to 21, characterised in that both the passenger's (56) and driver's seat (54) are constructed as bucket seats with laterally raised seat cushions and back cushion cheeks (90, 92).

23. Motor vehicle according to one of claims 13 to 22, characterised in that the rear support of the third seat (58) can be pivoted through the passage (38) between the driver's cab (88) and the living unit (attachment 10) into the latter, preferably in a substantially horizontal position, so that the third seat (58) can be used as a reclining seat.

## FIG.1

FIG.2

FIG.3

FIG. 4